Europäisches Patentamt

European Patent Office

Office européen des brevets

(11) Veröffentlichungsnummer: **0 264 663 B1**

(19)

(12) **EUROPÄISCHE PATENTSCHRIFT**

(45) Veröffentlichungstag der Patentschrift: 06.03.91

(21) Anmeldenummer: 87114119.8

(22) Anmeldetag: 27.09.87

(51) Int. Cl.⁵: **B29C 53/50**, B29C 65/18,
//B29L9:00,B29L23:20

(54) Verfahren und Vorrichtung zur Herstellung von Rohrkörpern, insbesondere für Verpackungstuben.

(30) Priorität: 15.10.86 CH 4119/86

(43) Veröffentlichungstag der Anmeldung:
27.04.88 Patentblatt 88/17

(45) Bekanntmachung des Hinweises auf die
Patenterteilung:
06.03.91 Patentblatt 91/10

(84) Benannte Vertragsstaaten:
AT BE CH DE ES FR GB GR IT LI LU NL SE

(56) Entgegenhaltungen:
EP-A- 0 058 245          EP-A- 0 177 470
DE-A- 2 008 085          DE-B- 1 053 774
FR-A- 1 166 776          FR-A- 1 518 369
FR-A- 2 176 558          FR-A- 2 365 426
GB-A- 559 657            GB-A- 1 045 279
GB-A- 1 220 099          GB-A- 2 024 097
LU-A- 39 455             US-A- 2 741 296
US-A- 3 367 261          US-A- 3 952 676

(73) Patentinhaber: KMK Karl Mägerle Lizenz AG
Baarerstrasse 57
CH-6300 ZUG(CH)

(72) Erfinder: Ueberegger, Henry
Haldenstrasse 12
CH-8345 Adetswil(CH)

(74) Vertreter: Hiebsch, Gerhard F., Dipl.-Ing. et al
Hiebsch & Peege Patentanwälte Postfach464
Erzbergerstrasse 5a
W-7700 Singen 1(DE)

## Beschreibung

Die Erfindung betrifft ein Verfahren nach dem Oberbegriff des Anspruches 1 sowie eine Vorrichtung nach dem Oberbegriff des Anspruches 8.

Eine solche Vorrichtung ist aus der US-PS 3,388,017 bekannt. Bei damit hergestellten Rohrkörpern hat es sich jedoch gezeigt, dass die äusseren Ränder der Schweissnähte nicht verschweisste Stellen aufweisen, die zum Abblättern oder sogar zum Aufreissen neigen. Im Innern abgeblätterte Materialreste können dabei in das zu verpackende Gut gelangen und dieses in unzulässiger Weise verunreinigen.

Zur Erfindung hat nun die Erkenntnis geführt, dass die zum Abblättern neigenden Stellen durch aus der Schweissnaht während des Schweissvorganges herausgepresstes Material gebildet sind. Die äusseren Ränder dieses ausgepressten Materials erkalten infolge ihrer sehr geringen Dicke vorzeitig und können deshalb keine Schweissverbindung mehr mit dem angrenzenden Material eingehen.

Der Erfindung liegt deshalb die Aufgabe zugrunde, ein Verfahren und eine Vorrichtung der eingangs genannten Art zu schaffen, bei denen die Schweissnaht keine unverschweissten Ränder herausgepressten Materials aufweist. Die gestellte Aufgabe wird erfindungsgemäss durch die in den kennzeichnenden Teilen der Ansprüche 1 und 8 angegebenen Merkmale gelöst.

Die Längsnut an dem an der zu schweissenden Naht anliegenden Innenband verleiht der Schweissnaht eine definierte Form und verhindert hervorgetretene Materialränder. Durch die kompakt gehaltene Schweissnaht ist eine gleichmässige Erwärmung der sich überlappenden Ränder des Folienbandes gewährleistet, so dass vorzeitig erkaltete Materialstellen ausgeschlossen sind. Durch die Anordnung der Längsnut im Innenband ist die Schweissnaht nach innen verlagert, so dass die Aussenseite der hergestellten Rohrkörper eine im wesentlichen bündige Oberfläche aufweist.

Die erfindungsgemässe Lösung bietet ferner den Vorteil, dass bei einem mehrschichtigen Folienband, von dem nur die innere Schicht mit dem Inhalt der fertigen Verpackungstube in Berührung kommen darf, eine durchgehende Verbindung der inneren Schicht an der Schweissnaht gewährleistet ist, wenn die Kante des inneren Randes des Folienbandes im Querschnitt derart schräggeschnitten ist, dass die innere Schicht die anderen Schichten des Folienbandes überragt. Durch die Längsnut im Innenband wird der überragende Randbereich, die anderen Schichten überdeckend, bis auf die innere Schicht des gegenüberliegenden Randbereiches niedergedrückt.

Das Ergebnis der erfindungsgemässen Lösung ist eine einwandfreie Schweissnaht einer qualitativ hochwertigen Verpackungstube.

Bevorzugte Ausführungsformen nach den Ansprüchen 2 bis 4 sowie 9 und 10 sind vorteilhaft, wenn das mehrschichtige Folienband eine metallische Schicht, vorzugsweise eine Aluminiumschicht, aufweist, durch deren induktive Erwärmung die angrenzenden Kunststoffschichten auf Schweisstemperatur gebracht werden.

Bevorzugte Ausführungsformen nach den Ansprüchen 5 bis 7, 10 und 11 sind bei der Verarbeitung eines Folienbandes vorteilhaft, dass keine Metallschicht enthält oder bei dem die Metallschicht zu dünn ist, um mittels Hochfrequenzenergie genügend Schweisswärme zu erzeugen. In diesem Fall erfolgt die Uebertragung der Schweisswärme von den als Schweisswerkzeuge dienenden, umlaufend angetriebenen Bändern durch Kontakt mit dem Folienband.

Die als Schweisswerkzeuge dienenden Bänder bestehen vorzugsweise aus Stahl. Ihre Aufheizung mittels Hochfrequenzenergie hat den besonderen Vorteil, dass keine weiteren Teile mit aufgeheizt werden. Da diese Bänder vorzugsweise eine geringe Masse aufweisen, lassen sie sich nicht nur rasch auf die erforderliche Temperatur aufheizen, sondern sie lassen sich auch rasch abkühlen, um durch eine grosse Arbeitsgeschwindigkeit eine hohe Wirtschaftlichkeit zu erzielen.

Eine weitere Erhöhung der Arbeitsgeschwindigkeit lässt sich durch eine bevorzugte Ausführungsform nach Anspruch 12 erzielen.

Anhand der Zeichnungen wird ein Ausführungsbeispiel der Erfindung näher erläutert. Es zeigt:

Fig. 1     eine Vorrichtung zur Herstellung von Rohrkörpern für Verpackungstuben, in einer schematischen Seitenansicht,

Fig. 2     ein Rohrbildungsbereich der Vorrichtung in einem grösseren Massstab gegenüber der Fig. 1,

Fig. 3     der Rohrbildungsbereich im Querschnitt, und

Fig. 4     ein Detail nach der Fig. 3.

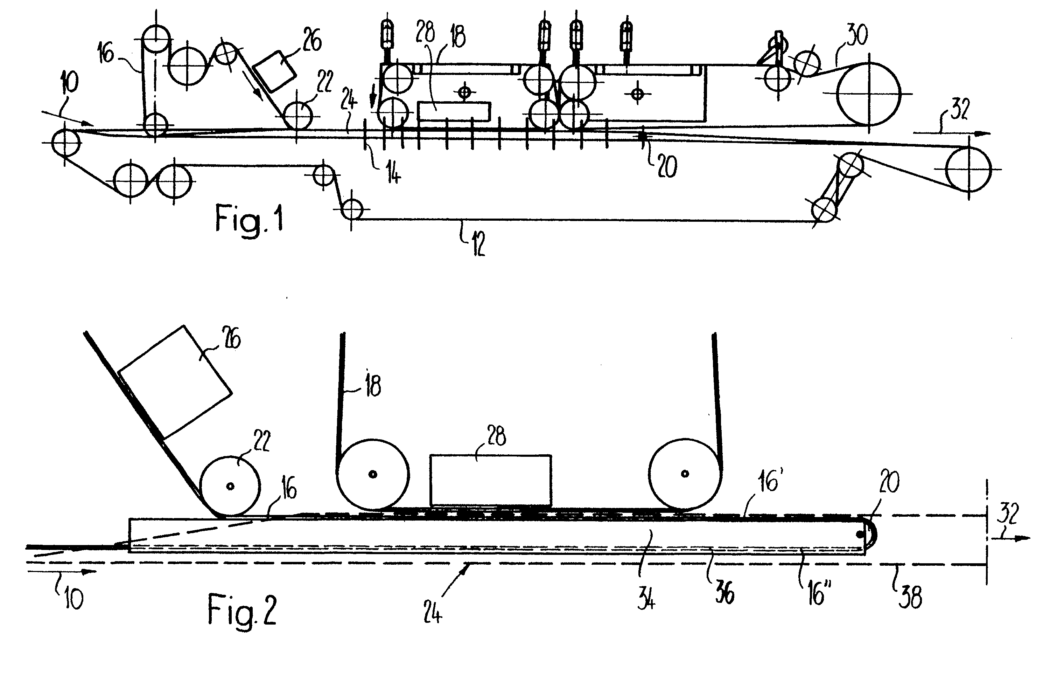

Der in der Fig. 1 schematisch dargestellen Vorrichtung wird ein von einer nicht-dargestellten Vorratsrolle abgezogenes Folienband 10 zugeführt. Das aus mehreren Schichten bestehende Folienband weist eine Aluminiumschicht auf, die in mindestens zwei thermoplastischen Kunststoffschichten eingebettet ist. Die dem Tubeninnern zuzukehrende Kunststoffschicht ist bei der Zuführung nach oben gerichtet. In der Vorrichtung wird das Folienband um eine sich in seiner Längsrichtung erstreckende Achse kontinuierlich zu einem Rohr mit sich überlappenden Rändern aufgerollt, die unter Wärmeeinwirkung miteinander verschweisst werden. Zum Aufrollen des Folienbandes dient ein unterhalb der Folienbahn angeordneter, umlaufend angetriebener Riemen 12. Mittels Führungselementen 14 wird der Riemen 12 an seinen beiden Rändern zunehmend nach oben gewölbt, um das auf ihm ruhende Folienband um einen sich in Längsrichtung oberhalb des Riemens 12 erstreckenden Dorn aufzurollen.

Die sich dabei überlappenden, durch zueinander parallele Kanten begrenzten Ränder des Folienbandes 10 werden zwischen einem Innenband 16 und einem Aussenband 18 aufeinandergepresst. Die beiden Bänder 16 und 18 dienen als Presswerkzeuge. Das Innenband 16 erstreckt sich entlang dem genannten Dorn innerhalb des zu bildenden Tubenrohres bis zu einer Umlenkrolle 20, so dass es innerhalb des gebildeten Tubenrohres zurückgeführt wird.

Bevor das Innenband 16 über eine Führungsrolle 22 in den Rohrbildungsbereich 24 gelangt, kann es in seiner Führungsbahn mittels einer Vorrichtung 26 induktiv vorgewärmt werden. Das Vorwärmen ist jedoch nicht zwingend notwendig, da zum Erzeugen der Schweisswärme eine im Rohrbildungsbereich 24 angeordnete Schweissvorrichtung 28 dient, welche die im Folienband eingebetteten Aluminiumfolien induktiv mittels Hochfrequenzenergie erwärmt. Die Erwärmung ist dabei durch Dosierung der Hochfrequenzenergie derart bemessen, dass die thermoplastischen Kunststoffschichten des Folienbandes auf eine zum Verschweissen geeignete Temperatur erwärmt werden. Während des Verschweissens und danach werden die sich überlappenden Ränder des gebildeten Tubenrohres durch die umlaufend angetriebenen Bänder 16 und 18 zusammengepresst. Nach dem Schweissen wird die gebildete Schweissnaht mittels eines umlaufend angetriebenen, endlosen Kühlbandes 30, unter Aufrechterhaltung eines Anpressdruckes gegen das Innenband 16, abgekühlt. Die aktiv bewirkte Abkühlung erlaubt eine höhere Arbeitsgeschwindigkeit. In Richtung 32 verlassen die längsseitig zugeschweissten und durch dargestellte Trennvorrichtung abgetrennten Rohrkörper die beschriebene Vorrichtung, um durch Anbringen eines Tubenkopfes und Aufsetzen einer Verschlusskappe ergänzt zu werden.

Aus der Fig. 2 ist ersichtlich, wie das Innenband 16 im Rohrbildungsbereich 24 entlang dem genannten Dorn 34 bis zur Umlenkrolle 20 und zurück geführt ist. Der obere Trum 16' liegt am Dorn 34 an, während der untere Trum 16" in einer im Dorn 34 angeordneten Längsnut 36 zurückgeführt ist. Das hergestellte Tubenrohr 38 ist gestrichelt dargestellt.

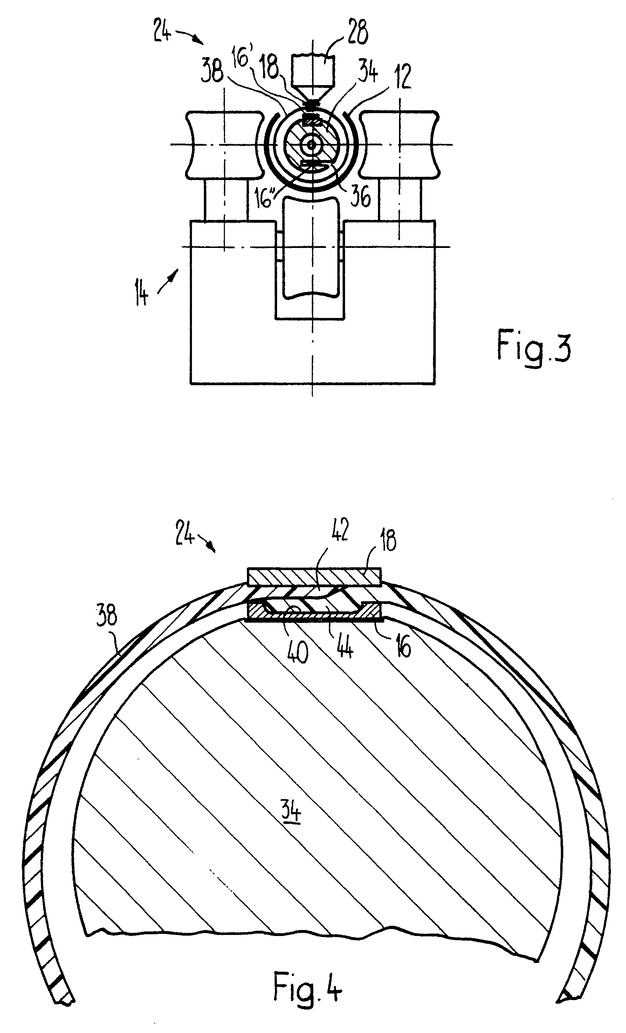

Die Fig. 3 zeigt einen Querschnitt des Rohrbildungsbereiches 24 in einem Abschnitt, in welchem das Folienband mittels des Riemens 12 bereits zum Tubenrohr 38 aufgerollt ist. In dieser Figur ist deutlich erkennbar, wie der obere Trum 16' des Innenbandes 16 auf dem Dorn 34 geführt ist, während der untere Trum 16" innerhalb der Nut 36 zurückgeführt ist. Das Aussenband 18 wird durch die federnd angeordnete Schweissvorrichtung 28 gegen die sich überlappenden Ränder des gebildeten Rohres 38 gepresst.

Die Fig. 4 zeigt ein Detail aus dem Rohrbildungsbereich 24. In dieser Figur ist ersichtlich, dass das Innenband 16 eine Längsnut 40 aufweist, die zum Formen der nach innen gerichteten Seite der Rohrnaht des Tubenrohres 38 dient. Die Längsnut 40 verleiht der Rohrnaht eine definierte Form und verhindert, dass die sich überlappenden Ränder 42 und 44 beim Zusammenpressen unkontrolliert ausdehnen, indem sie das Ausfliessen des während des Schweissvorganges aufgeschmolzenen Materials begrenzt. Das Material ist ein thermoplastischer Kunststoff, insbesondere Polyethylen, Polypropylen oder deren Copolymere. Dieser schweissbare Kunststoff bildet die äusseren Schichten des zum Rohr 38 geformten Folienbandes. Ausser einer zwischen den Kunststoffschichten eingebetteten Aluminiumschicht kann das Folienband weitere Schichten, wie beispielsweise eine Papierschicht und Haftschichten für die Aluminiumfolie aufweisen.

Bei einer Ausführungsform der Vorrichtung zum Herstellen von Rohrkörpern aus einem Folienband ohne eingelagerte Metallschicht oder mit einer sehr dünnen Metallschicht werden die beiden als Schweisswerkzeuge dienenden, umlaufend angetriebenen Bänder 16 und 18 auf die erforderliche Schweisstemperatur induktiv mittels Hochfrequenzenergie aufgeheizt. Die Aufheizung kann vor dem Rohrbildungsbereich 24 (Fig. 2) oder für das Aussenband 18 auch innerhalb dieses Bereiches durch entsprechend angeordnete Aufheizeinrichtungen erfolgen. In einem solchen Fall dient die Vorrichtung 26 nicht zum Vorheizen des Innenbandes 16, sondern zum vollständigen Aufheizen dieses Bandes auf die zum Schweissen erforderliche Temperatur. Das Aussenband 18 kann bei einer solchen Ausführungsform der Vorrichtung entweder vor dem Rohrbildungsbereich 24 (Fig. 2) oder innerhalb dieses Bereiches mittels der Vorrichtung 28 erfolgen.

Die umlaufend angetriebenen Bänder 16 und 18 bestehen vorzugsweise aus Stahl, sofern deren Aufheizung induktiv mittels Hochfrequenzenergie erfolgt. Wird die Schweisswärme jedoch ausschliesslich mittels der Vorrichtung 28 unmittelbar in der Aluminiumschicht des Folienbandes erzeugt, dann können die als Presswerkzeuge dienenden Bänder 16 und 18 beispielsweise auch aus Polytetrafluorethylen bestehen. Die Vorrichtung 26 ist in diesem Fall nicht erforderlich.

Die zum induktiven Erwärmen dienenden Vorrichtungen 26 und 28 weisen im wesentlichen eine Hochfrequenzspule auf, deren abgegebene Energie auf den zu erwärmenden Bereich konzentriert ist. Zur Speisung dieser Hochfrequenzspulen dienen Hochfrequenzgeneratoren bekannter Bauart.

Eine Metallschicht, insbesondere eine Aluminiumschicht, aufweisende mehrschichtige Folien der beschriebenen Art sind bekannt. Die beschriebene Vorrichtung ist jedoch auch zur Verarbeitung eines Folienbandes geeignet, das nur aus einer einzigen thermoplastischen Kunststoffschicht besteht.

**Ansprüche**

1. Verfahren zur Herstellung von Rohrkörpern, insbesondere für Verpackungstuben, aus einem eine Innenseite und eine Aussenseite aus schweissbarem Kunststoff sowie zueinander parallele Kanten aufweisenden Folienband (10), das um eine sich in seiner Längsrichtung erstreckende Achse kontinuierlich zu einem Rohr (38) mit sich entlang den Kanten überlappenden Rändern (42, 44) aufgerollt wird, welche Ränder unter Wärmeeinwirkung miteinander verschweisst und zwischen zwei endlosen, in Längsrichtung umlaufend angetriebenen Bändern (16, 18) zusammengepresst werden, dadurch gekennzeichnet, dass ein die Kanten der beiden Ränder (42, 44) umfassender Teil des Umfangsbereiches des gebildeten Rohres (38) nach Zuführung der Schweisswärme während des Zusammenpressens zumindest teilweise in eine Längsnut (40) hineingepresst wird, die in dem innerhalb des gebildeten Rohres (38) umlaufenden Innenband (16) der beiden Bänder (16, 18) gebildet ist.

2. Verfahren nach Anspruch 1, bei welchem das Folienband (10) mehrere Schichten aufweist, von denen eine der eingebetteten Schichten eine metallische Schicht ist, dadurch gekennzeichnet, dass die metallische Schicht der beiden sich überlappenden Ränder (42, 44) induktiv mittels Hochfrequenzenergie erwärmt wird.

3. Verfahren nach Anspruch 2, dadurch gekennzeichnet, dass das Innenband (16) vorgeheizt wird.

4. Verfahren nach Anspruch 3, dadurch gekennzeichnet, dass als Innenband (16) ein Metallband dient, dessen Vorheizung vor seinem Kontakt mit dem zu bildenden Rohr (38) induktiv mittels Hochfrequenzenergie erfolgt.

5. Verfahren nach Anspruch 1, dadurch gekennzeichnet, dass als angetriebene Bänder (16, 18) Metallbänder dienen, die induktiv mittels Hochfrequenzenergie auf die zum Schweissen erforderliche Temperatur aufgeheizt werden.

6. Verfahren nach Anspruch 5, dadurch gekennzeichnet, dass die Aufheizung der beiden Bänder (16, 18) vor ihrem Kontakt mit dem zu bildenden Rohr (38) erfolgt.

7. Verfahren nach Anspruch 5 oder 6, dadurch gekennzeichnet, dass die Aufheizung des Aussenbandes (18) entweder ausschliesslich oder zusätzlich im Schweissbereich erfolgt.

8. Vorrichtung zur Herstellung von Rohrkörpern, insbesondere für Verpackungstuben, aus einem eine Innenseite und eine Aussenseite sowie zueinander parallele Kanten aufweisenden Folienband (10), mit Mitteln (12, 14) zum kontinuierlichen Aufrollen des Folienbandes (10) um eine sich in seiner Längsrichtung erstreckende Achse zur Bildung eines Rohres (38) mit sich entlang den Kanten überlappenden Rändern (42, 44), mit Mitteln (26, 28) zum Erzeugen der zum Verschweissen der sich überlappenden Ränder (42, 44) dienenden Schweisswärme, sowie mit zwei in Längsrichtung umlaufend antreibbaren, zum Zusammenpressen der sich überlappenden Ränder (42, 44) bestimmte Bänder (16, 18), dadurch gekennzeichnet, dass das innerhalb des zu bildenden Rohres (38) umlaufende Innenband (16) eine Längsnut (40) zur mindestens teilweisen Aufnahme der sich überlappenden Ränder (42, 44) des zu bildenden Rohres (38) aufweist.

9. Vorrichtung nach Anspruch 8, dadurch gekennzeichnet, dass die Mittel zum Erzeugen der Schweisswärme eine Hochfrequenzenergie abgebende Vorrichtung (28) aufweisen, die auf die Bahn der sich überlappenden Ränder (42, 44) des zu bildenden Rohres (38) gerichtet ist.

10. Vorrichtung nach Anspruch 8 oder 9, dadurch gekennzeichnet, dass mindestens das Innenband (16) aus Stahl besteht und ausserhalb des Rohrbildungsbereiches (24) Mittel (26) zum induktiven Vorheizen oder zum ausschliesslichen induktiven Aufheizen des Innenbandes (16) mittels Hochfrequenzenergie auf das Innenband (16) gerichtet sind.

11. Vorrichtung nach Anspruch 10, dadurch gekennzeichnet, dass auch das Aussenband (18) aus Stahl besteht und Mittel (28) zum ausschliesslichen induktiven Aufheizen des Aussenbandes (18) mittels Hochfrequenzenergie entweder vor dem Rohrbildungsbereich (24) oder im Schweissbereich auf das Aussenband (18) gerichtet sind.

12. Vorrichtung nach einem der Ansprüche 8 bis 11, dadurch gekennzeichnet, dass dem Aussenband (18) in Laufrichtung des gebildeten Rohres (38) ein am Rohr (38) angreifendes Kühlband (30) nachgeordnet ist.

## Claims

1. A process for the production of tubular bodies, especially for packaging tubes, consisting of a foil strip (10) having an inside and an outside of weldable synthetic meterial as well as edges parallel to each other, the foil strip being rolled up continuously around an axis extending in its longitudinal direction in order to form a tube (38) with borders (42,44) lapping over along the edges, these borders being welded with each other under the effect of heat and being pressed together between two endless belts (16,18) actuated rotatingly, characterized in that part of the peripheral zone of the tube formed (38) enclosing the edges of the two borders (42,44) is pressed, at least partially, after the welding heat is fed and during the pressing operation, into a longitudinal groove (40) which is formed in the interior belt (16) of the two belts (16,18) which rotates in the interior of the tube formed (38).

2. A process according to claim 1, in which the foil strip (10) has several layers of which one of the embedded layers is a metallic layer, characterized in that the metallic layer of the two overlapping borders (42,44) is heated by induction with high frequency energy.

3. A process according to claim 2, characterized in that the interior belt (16) is preheated.

4. A process according to claim 3, characterized in that as interior belt (16) a metallic belt is used which is preheated by induction with high frequency energy prior to its contact with the tube to be formed (38).

5. A process according to claim 1, characterized in that as driven belts (16,18) metallic belts are used which are heated by induction with high frequency energy to the temperature required for welding.

6. A process according to claim 5, characterized in that the two belts (16,18) are heated prior to their contact with the tube to be formed (38).

7. A process according to clad 5 or 6, characterized in that the exterior belt (18) is heated either exclusively or additionally in the welding zone.

8. A device for the production of tubular articles, especially for packaging tubes, consisting of a foil strip (10) having an inside and an outside as well as edges parallel to each other, comprising means (12,14) for continuously rolling up the foil strip (10) around an axis extending in its longitudinal direction in order to fom a tube (38) with borders (42,44) lapping over along the edges, means (26,28) for generating the welding heat serving for welding the overlapping borders (42,44) as well as two belts (16,18) actuated rotatingly in the longitudinal direction and are destined for pressing together the overlapping borders (42,44), characterized in that the interior belt (l6) rotating in the interior of the tube to be formed (38) has a longitudinal groove (40) for receiving, at least partially, the overlapping borders (42,44) of the tube to be formed (38).

9. A device according to claim 8, characterized in that the means for generating the welding heat comprise a device (28) releasing high frequency energy which is directed towards the path of the overlapping borders (42,44) of the tube to be formed (38).

10. A device according to claim 8 or 9, characterized in that at least the interior belt (16) consists of steel, and in that outside the area of forming the tubular body means (26) are provided for preheating by induction or for exclusively heating by induction the interior belt (16) with high frequency energy which means are directed towards the interior belt (l6).

11. A device according to claim l0, characterized in that the exterior belt (l8) consists of steel, and in that means (28) for exclusively heating by induction the exterior belt (l8) with high frequency energy are directed towards the exterior belt (l8), either before the area forming the tubular body or in the welding zone.

12. A device according to at least one of claims 8 to 11, characterized in that the exterior belt (l8) is followed by a cooling belt (30) touching the tube (38) in the direction of travel of the tube formed (38).

## Revendications

1. Procédé de fabrication de corps tubulaires, notamment pour tubes d'emballage, à partir d'une pellicule en forme de ruban (10) qui présente une face intérieure et un face extérieure en une matière plastique soudable ainsi que des bords parallèles l'un à l'autre, et qui est enroulée en continu autour d'un axe s'étendant selon sa direction longitudinale pour former un tube (38) avec des bordures (42,44) qui se chevauchent le long des bords, ces bordures étant soudées l'une à l'autre par action de la chaleur et pressées l'une contre l'autre entre deux bandes sans fin (16,18) entraînées en défilement dans la direction longitudinale, caractérisé en ce qu'une partie de la zone périphérique du tube formé (38), englobant les bords des deux bordures (42,44), est insérée de force, au moins en partie, après apport de la chaleur de soudage et au cours de l'opération de pressage, à l'intérieur d'une rainure longitudinale (40) qui est formée dans la bande intérieure (l6) des deux bandes (16,18) , laquelle défile à l'intérieur du tube formé (38).

2. Procédé selon la revendication 1, la pellicule en forme de ruban (10) présentant plusieurs couches parmi lesquelles l'une des couches noyées est une couche métallique, caractérisé en ce que la couche métallique des deux bordures (42,44) qui se chevauchent, est chauffée par induction au moyen d'énergie haute fréquence.

3. Procédé selon la revendication 2, caractérisé en ce que la bande intérieure (16) est préchauffée.

4. Procédé selon la revendication 3, caractérisé en ce qu'en guise de bande intérieure (16), on utilise une bande métallique dont le préchauffage est effectué par induction au moyen d'une énergie haute fréquence, avant son contact avec le tube à former (38).

5. Procédé selon la revendication 1, caractérisé en ce qu'en guise de bandes entraînées (16,18) on utilise des bandes métalliques qui sont chauffées par induction, au moyen d'énergie haute fréquence, jusqu'à la température nécessaire au soudage.

6. Procédé selon la revendication 5, caractérisé en ce que le chauffage des deux bandes (16,18) est effectué avant leur contact avec le tube à former (38).

7. Procédé selon la revendication 5 ou 6, caractérisé en ce que le chauffage de la bande extérieure (18) se fait soit exclusivement soit complémentairement, dans la zone de soudage.

8. Dispositif de fabrication de corps tubulaires, notamment pour tubes d'emballage, à partir d'une pellicule en forme de ruban (10) qui présente une face intérieure et une face extérieure ainsi que des bords parallèles l'un à l'autre, comportant des moyens (12,14) pour enrouler en continu la pellicule en forme de ruban (10) autour d'un axe s'étendant dans sa direction longitudinale, en vue de réaliser un tube (38) avec des bordures (42,44) se chevauchant le long des bords, des moyens (26,28) pour produire la chaleur de soudage servant à souder l'une à l'autre les bordures (42,44) qui se chevauchent, ainsi que des bandes (16,18) susceptibles d'être entraînées en défilement dans la direction longitudinale, et destinées à presser l'une contre l'autre les bordures (42,44) qui se chevauchent, caractérisé en ce que la bande intérieure (16) défilant à l'intérieur du tube à former (38), présente une rainure longitudinale (40) destinée à recevoir au moins en partie les bordures (42,44), qui se chevauchent, du tube à former (38).

9. Dispositif selon la revendication 8, caractérisé en ce que les moyens destinés à produire la chaleur de soudage comportent un dispositif (28) fournissant une énergie haute fréquence et dirigé vers la trajectoire des bordures (42,44) , qui se chevauchent du tube à former (38).

10. Dispositif selon la revendication 8 ou 9, caractérisé en ce qu'au moins la bande intérieure (l6) est réalisée en acier, et en ce que des moyens (26) destinés à préchauffer par induction ou à chauffer exclusivement par induction la bande intérieure (16) au moyen d'énergie haute fréquence, sont dirigés vers la bande intérieure (16), à l'extérieur de la zone de formation du tube (24).

11. Dispositif selon la revendication (10) caractérisé en ce que la bande extérieure (18) est également réalisée en acier, et en ce que des moyens (28) destinés à chauffer exclusivement par induction la bande extérieure (18) au moyen d'énergie haute fréquence, sont dirigés vers la bande extérieure (18) , soit avant la zone de formation du tube (24), soit dans la zone de soudage.

12. Dispositif selon l'une des revendications 8 à 11, caractérisé en ce qu'une bande de refroidissement (30) touchant le tube (38) est montée en aval de la bande extérieure (18) dans le sens de circulation du tube formé (38).

Fig.1

Fig.2

Fig.3

Fig.4